# EUROPEAN PATENT APPLICATION

(11) **EP 2 527 708 A1**
(43) Date of publication of application: **28.11.2012**
(21) Application number: 11167721.7
(22) Date of filing: 26.05.2011
(51) Int. Cl.: F16L 55/26, G01N 29/265, G01N 29/28

(54) **Apparatus for pipeline inspection and method of pipeline inspection**

(71) Applicant: Pii Limited, Cramlington, Northumberland NE23 1WW (GB)
(72) Inventor: Herron, William, Northumberland NE23 1WW (GB); Palma, Robert, Northumberland NE23 1WW (GB)
(74) Representative: McWilliams, David John

(57) **Abstract**

An apparatus (10) for pipeline inspection includes groups of ultrasonic sensor units (14). An upstream group is axially offset from a downstream group. In each group, the sensor units (14) are spaced circumferentially from one another. The sensor units in the downstream group are arranged out of phase with the sensor units in the upstream group. The downstream group provides inspection coverage for the circumferential spacing between the sensor units (14) in the upstream group, and the upstream group provides inspection coverage for the circumferential spacing between the sensor units (14) in the downstream group. Each sensor unit (14) includes an array of ultrasonic sensors (16) defining an arc of a circle extending in a circumferential direction with respect to a longitudinal axis (X) of the apparatus (10). Each array is mounted on a carrier (30) and is biased locally in a radial direction. Each carrier is movable from a first radial position to a second radial position in response to changes in pipe diameter.

## Description

The present disclosure relates to a pipeline inspection apparatus and a method of pipeline inspection.

It is known to carry out an inspection of a pipeline using an apparatus, commonly referred to as a pipeline pig, which travels inside the pipeline, and includes one or more sensors arranged for measuring or detecting defects in the wall of the pipeline.

Wall thickness and cracks in the wall of a liquid-filled pipeline can be measured or detected using ultrasonic sensors, wherein the liquid in the pipeline provides a couple medium for transferring ultrasonic waves from the ultrasonic sensors to the pipe wall.

Typically, the ultrasonic sensors are mounted on a sensor carrier, which is intended to position the ultrasonic sensors adjacent the pipe wall, e.g. as a pig carries out an inspection run through a pipeline. The sensor carrier may consist of or include a skid, which is intended to run immediately adjacent or in contact with an inner surface of the pipe, with the sensors arranged at a stand off from the outer surface of the skid, in order to protect the sensors against wear or other damage from contact with the pipe.

In conventional pipeline inspection apparatus, skids take one of two forms: a skid having a generally helical shape with respect to a longitudinal axis of the apparatus; or a straight skid which extends parallel with or at an angle of inclination to the longitudinal axis of the apparatus.

In each case, the skids can not be adjusted and/or changed during an inspection run without physically stopping the apparatus at a location along the pipeline and carrying out maintenance *in situ.* Hence, the conventional skids are often unsuitable for use in inspecting a pipeline which has variations in bore diameter along its length. As such, it is generally accepted that a given skid design is only suitable for a single diameter of pipe. Although inspection of dual or multi-diameter lines may sometimes be possible using conventional skid designs, the reliability of results is often poor and require considerable design effort and/or trial and error to prove its effectiveness.

The disclosure proposes an apparatus and method of pipeline inspection which overcomes or mitigates one or more of the above problems, or other disadvantages or problems associated with conventional apparatus and methods for inline inspection of pipelines using ultrasonic sensors.

The disclosure further provides a method of pipeline inspection for a pipeline having a first section with a first bore diameter and a second section with a second bore diameter which is greater than the first bore diameter, said method including the step of:
providing a pipeline apparatus for in-line inspection of the pipeline, said apparatus including a plurality of ultrasonic sensor units arranged for inspection of a pipe wall, each sensor unit having an array of ultrasonic sensors, wherein said plurality of sensor units defines an upstream group of sensor units and a downstream group of sensor units, said upstream group being axially offset from said downstream group, wherein the sensor units in the upstream group are spaced circumferentially from one another, and the sensor units in the downstream group are spaced circumferentially from one another, further wherein the sensor units in the downstream group are arranged out of phase with the sensor units in the upstream group,
the method further including the steps of sending the apparatus on a continuous run through said first and second sections of the pipeline, and using said ultrasonic sensor units to provide a circumferential inspection of the pipeline in both the first section and said second section, wherein the downstream group of sensor units provides downstream inspection coverage for the circumferential spacing between the sensor units in the upstream group, and the upstream group of sensor units provides upstream inspection coverage for the circumferential spacing between the sensor units in the downstream group.

The disclosure provides an apparatus for pipeline inspection, the apparatus having a longitudinal axis and comprising a plurality of ultrasonic sensor units arranged for inspection of a pipe wall, each sensor unit including an array of ultrasonic sensors, wherein said plurality of sensor units defines two or more groups of sensor units, said groups of sensor units being axially offset from one another with respect to the longitudinal axis of the apparatus, the sensor units in each group being spaced circumferentially from one another, further wherein the sensor units are arranged out of phase, to provide inspection coverage for the circumferential spacing between the sensor units in said groups, so that the combined output from the groups of sensor units provides 360 degrees of inspection coverage.

In exemplary embodiments, each array of ultrasonic sensors defines an arc of a circle extending in a circumferential direction with respect to a longitudinal axis of the apparatus.

Each array of ultrasonic sensors may be mounted on a carrier and biased locally on said carrier in a radial direction with respect to a longitudinal axis of the apparatus. Each carrier is movable between a first radial position for a first bore diameter to a second radial position for a second bore diameter, e.g. greater than said first diameter.

In exemplary embodiments, each array of ultrasonic sensors defines an inspection zone and the combined area of coverage for the inspections zones is at least enough to permit circumferential inspection of the internal circumference of a pipe when one or more of said carriers is in said second radial position.

The accompanying drawings, which are incorporated in and constitute a part of the specification, illustrate one or more embodiments and, together with the description, explain these embodiments. In the drawings:
Figure 1 is a schematic perspective view of part of an apparatus for pipeline inspection including multiple vessels, each vessel having multiple sensor units;
Figure 2 is similar to Figure 1 and simplified to show only a single vessel, with only a sensor unit and associated biasing mechanism;
Figure 3 is a schematic perspective view of a sensor unit and carrier for use in the embodiments of Figures 1 and 2;
Figure 4 is a schematic perspective view of the carrier in Figure 3; and
Figure 5 is a schematic diagram showing an apparatus of the kind shown in Figure 1 (but having only one sensor vessel) operable through a pipeline having multiple bore diameters.

The following description of the exemplary embodiments refers to the accompanying drawings. The same reference numbers in different drawings identify the same or similar elements. The following detailed description does not limit the invention. Instead, the scope of the invention is defined by the appended claims.

Reference throughout the disclosure to "an exemplary embodiment," "an embodiment," or variations thereof means that a particular feature, structure, or characteristic described in connection with an embodiment is included in at least one embodiment of the subject matter disclosed. Thus, the appearance of the phrases "in an exemplary embodiment," "in an embodiment," or variations thereof in various places throughout the disclosure is not necessarily referring to the same embodiment. Further, the particular features, structures or characteristics may be combined in any suitable manner in one or more embodiments.

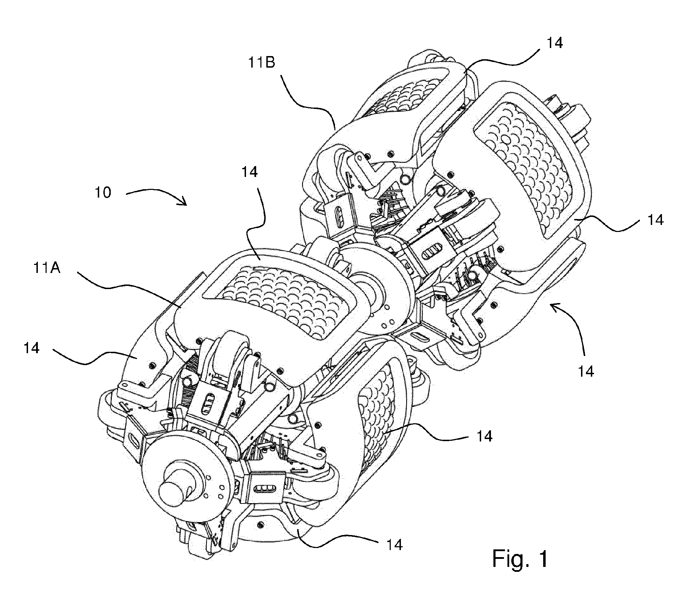

Referring firstly to Figure 1, part of a pipeline inspection apparatus for in-line inspection of pipelines is indicated generally at 10.

The apparatus 10 includes first and second sensor vessels 11A, 11B, which are coupled for movement together along a pipeline. As viewed in Figure 1, vessel 11A would be the leading or upstream vessel, in use, with vessel 11B arranged downstream of vessel 11A.

Each vessel 11A, 11B is provided with multiple ultrasonic sensor units 14, each of which is movably mounted in a manner described in more detail below. Each sensor unit 14 includes multiple ultrasonic sensors 16. The sensors 16 define an arcuate inspection array, which extends in a circumferential direction with respect to a longitudinal axis of the apparatus 10.

The ultrasonic sensors 16 within the inspection array can be orientated normally to the pipe wall for wall thickness evaluation or at an angle to the pipe wall so as to induce shear waves and identify any cracks in the pipeline, for example.

The sensor units 14 on the upstream vessel 11A define an upstream group of sensor units and the sensor units 14 on the downstream vessel 11B define an upstream group of sensor units.

The sensor units 14 in the upstream group are spaced circumferentially from one another, as are the sensor units 14 in the downstream group. Hence, for each vessel 11A,11B, there is a zone of non-coverage with respect to the internal circumference of a pipe along which the apparatus 10 is travelling, i.e. between the arcuate inspection arrays of adjacent sensor units 14 in each group.

To overcome this, the sensor units 14 in the downstream group are arranged out of phase with the sensor units 14 in the upstream group, with the downstream group providing downstream inspection coverage for the circumferential spacing between the sensor units in the upstream group, and further with the upstream group providing upstream inspection coverage for the circumferential spacing between the sensor units in the downstream group. Hence, the arrangement provides 360 degrees of inspection coverage.

In the illustrated embodiment of Figure 1, each vessel 11A,11B includes four sensor units 14, arranged at 90 degrees to one another about the longitudinal axis of the respective vessel 11A,11B. Moreover, the sensor units 14 on the leading vessel 11A are out of phase (by 45 degrees) with the sensor units 14 on the trailing vessel 11B.

The zone of inspection coverage for each inspection array is at least enough to permit circumferential inspection (i.e. 360 degrees) of the internal surface of a pipe, by combining the inspection results from the inspection arrays on the first and second vessels 11A, 11B.

In exemplary embodiments, the inspection arrays are configured to provide a degree of overlap between the area covered by the sensor units 14 on the leading vessel 11A and the area covered by the sensor units 14 on the trailing vessel 11B. This provides for greater accuracy of inspection data, as well as accounting for misalignment between the vessels 11A,11B.

In exemplary embodiments, the circumferential extent of each inspection array is greater than the circumferential spacing between each inspection array, for each of the upstream and downstream groups.

As will be described in more detail below, each sensor unit 14 is movable between a first radial position (e.g. a retracted position) and a second radial position (e.g. an extended position). In exemplary embodiments, the zone of inspection coverage for each inspection array is at least enough to permit circumferential inspection of the internal circumference of a pipe (i.e. by combining the inspection results from the inspection arrays on the first and second vessels 11A, 11B) for each radial position of the sensor units 14. Hence, 360 degrees of inspection coverage can be achieved even at the maximum radial extent of the sensor units 14.

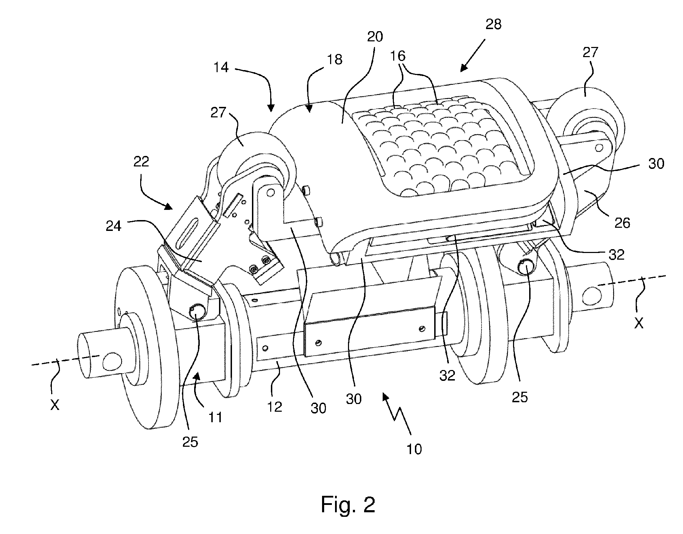

Figure 2 is a simplified view of one of the vessels 11A, 11B, in which only one of the sensor units 14 is illustrated, for clarity of understanding.

The vessel 11 has a central body 12 with a longitudinal axis X (extending left to right as viewed in Figure 2). A sensor unit 14 is mounted in association with said body 12. The sensor unit 14 includes an arcuate array of ultrasonic sensors 16 for inspecting a pipe wall.

The sensor unit 14 includes a skid 18 having an outer surface 20 intended to run adjacent or in contact with a pipe wall, in use. The outer surface 20 is arcuate in a circumferential direction with respect to the longitudinal axis X. The sensors 16 also define an arcuate inspection plane in a circumferential direction with respect to the longitudinal axis X. The inspection plane is arranged at a stand off from the outer surface of the skid 18 (e.g. radially inward of the outer surface 20), for protecting the sensors 16 against wear or other damage from contact with the pipe wall.

The ultrasonic sensors 16 within the inspection array can be orientated normally to the pipe wall for wall thickness evaluation or at an angle to the pipe wall so as to induce shear waves and identify any cracks in the pipeline, for example.

The apparatus 10 includes a spring-loaded mechanism 22 for permitting movement of the sensor unit 14 with respect to the longitudinal axis of the central body 12, e.g. in response to changes in bore diameter.

The mechanism 22 is configured for biasing the sensor unit 14 in a generally radial direction, in order to bias the outer surface 20 of the skid 18 in the direction of a pipe wall. More particularly, the mechanism 22 is configured for moving the sensor unit 14 between a first radial position (e.g. a retracted position for use in a small diameter bore) and a second radial position (e.g. an extended position for use in a large diameter bore), in response to changes in pipe diameter. The mechanism 22 is configured to position the sensor unit 14 at an appropriate radial position (e.g. intermediate said first and second radial positions), depending on the size of the bore through which the apparatus 10 is passing. Hence, the apparatus 10 can be used for inspection of multi-diameter pipelines or across a range of pipelines having different diameters.

The mechanism 22 includes first and second suspension members 24, 26 configured for biasing the sensor unit 14 in the direction of a pipe wall (e.g. in a radial or outward direction relative to the longitudinal axis X). The first and second suspension members 24, 26 are axially off set from one another, with respect to the longitudinal axis of the central body 12.

The first and second suspension members 24, 26 are connected to body 12 by a spring-biased pivotal connection 25, so as to be configured to pivot relative to said longitudinal axis of the central body 12. The suspension members 24, 26 are biased towards said second radial position (i.e. an extended position relative to the body 12). Hence, the suspension members 24, 26 act as spring-biased struts or arms which are movable relative to the central body 12 of the vessel 11, for positioning the sensor unit 14 adjacent the pipe wall.

A roller 27 is provided at the end of each suspension member 24, 26, for rolling contact with the internal surface of a pipe along which the apparatus is travelling, in use.

The first and second suspension members 24, 26 form part of a linkage 28, which is configured for movement of the sensor unit 14 radially with respect to the longitudinal axis of the central body 12, e.g. between the first radial position and second radial position, in response to changes in bore diameter as the suspension rollers 27 react against the pipe wall.

The linkage 28 includes a carrier 30 arranged for movement with said first and second suspension members 24, 26. The sensor unit 14 is mounted on said carrier 30.

The carrier 30 is mounted between the first and second suspension members 24, 26, and the carrier 30 is arranged to remain parallel with the longitudinal axis of the central body 12 during movement of the sensor unit 14.

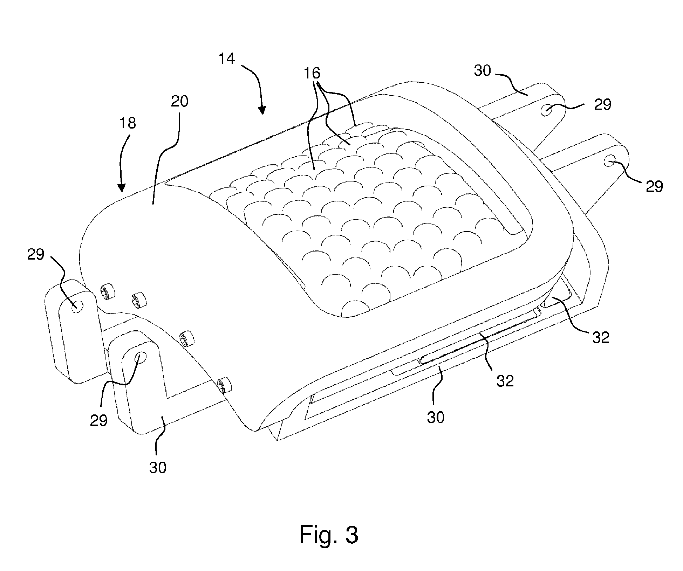

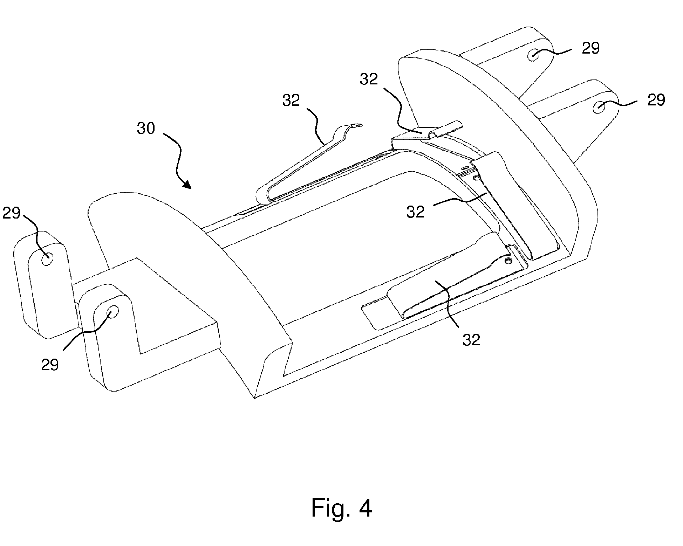

As can be seen clearly in Figures 3 and 4, the carrier 30 includes pivot points 29 for connection to the first and second suspension members 24, 26.

As can be seen most clearly in Figure 4, the carrier 30 biasing elements in the form of leaf springs 32, which are arranged beneath the sensor unit 14. The biasing elements provide local biasing of the sensor unit 14 relative to the longitudinal axis of the central body 12, e.g. in the direction of the pipe wall.

The spring-loaded mechanism 22 ensures that the sensors 16 are deployed adjacent the pipe wall, even in bends (where conventional systems fail or are highly unreliable). Moreover, the localised biasing of the sensor unit 14 on the carrier 30 assists in providing correct orientation and clamping force of the skid 18 against the pipe wall.

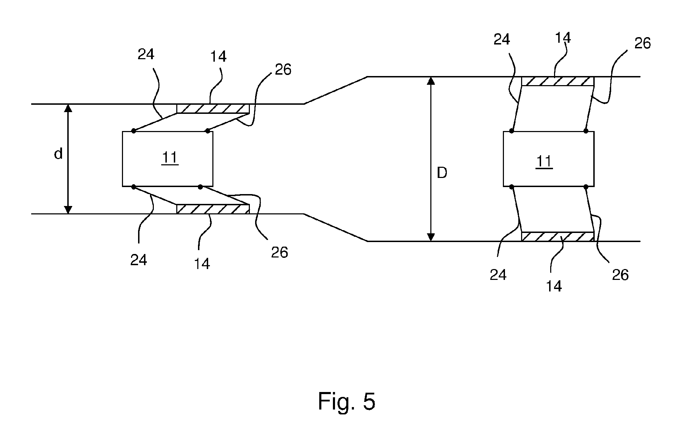

The apparatus 10 is suited for use inspecting a pipeline having a first section with a first bore diameter and a second section with a second bore diameter (i.e. less than or greater than the first bore diameter). The apparatus 10 can be sent on a continuous run through said first and second sections of the pipeline. The mechanism 22 is used to bias the sensor unit 14 against an inner surface of the first section and to automatically bias the sensor unit 14 against an inner surface of the second section upon a change in bore diameter between said first and second sections of the pipeline. An example is shown in Figure 5.

The apparatus 10 permits accurate modelling of the biasing forces required to maintain the skid 18 in contact with the pipe wall, providing a significant improvement over conventional skid designs.

The apparatus 10 is advantageous, at least insofar as it should reduce the time required to design a skid for a given diameter of pipe, by allowing the required forces to be calculated in an early stage in the design procedure, reducing or obviating the need for optimisation loops and other acts of trial and error.

Moreover, the linkage 28 permits use of the apparatus across a range of pipeline diameters, including improved tracking of the pipe bore, especially in bends and through restrictive pipeline features such as tapers, valves, etc.

The linkage 28 permits use of the apparatus across a range of pipeline diameters, including improved tracking of the pipe bore. Each linkage 28 can move independently with respect to the other linkages 28 on the vessels 11A,11B. This enables the apparatus to pass through and inspect tight bend diameters and difficult or restrictive pipeline features such as tapers, valves, etc. It is envisaged that exemplary embodiments will be cable of inspection through 1D bends and mitre bends.

In the exemplary embodiment of Figure 1, the linkage 28 takes the form of a 4-bar linkage, consisting of the body 12, suspension members 24, 26 and carrier 30. Other forms of collapsible linkage may be applicable, e.g. a 5-bar linkage including said suspension members 24, 26, configured to ensure that the sensor unit 14 tracks the pipe wall irrespective of the attitude of the internal pig body 12 within the pipeline.

It should be noted that Figure 1 shows a twin vessel arrangement with two groups of circumferentially spaced sensor units, wherein the two groups of sensor units are axially offset and out of phase, in order to provide 360 degrees of inspection coverage. However, exemplary embodiments may incorporate three or more axially offset groups of circumferentially spaced sensor units on one, two or more vessels, for providing 360 degrees of inspection coverage. Although Figure 1 shows an embodiment in which there are four sensor units per group of sensor units, other embodiments may consist of three or more sensor units per group.

In exemplary embodiments, the apparatus 10 is configured so that the combined inspection data from the sensors 16 from the groups of sensor units 14 provides 360 degrees of coverage (with respect to a longitudinal axis of the apparatus 10) irrespective of the position of relative position of the sensor units to one another, e.g. if one or more of the sensor units 14 are arranged at different radial positions. This enables the apparatus 10 to provide 360 degree inspection of the internal surface of a pipeline having multiple bore diameters, or across a range of different pipe diameters.

Although Figures 1 and 2 are described with spring-loaded suspension members in the form of pivotable arms or struts, other types of suspension may be employed. Although Figures 2 to 4 are described with leaf springs for local biasing of the sensor unit on the carrier, other forms of resilient biasing element may be incorporated.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended and are understood to be within the scope of the claims.

## Claims

1. Apparatus for pipeline inspection, the apparatus having a longitudinal axis and comprising a plurality of ultrasonic sensor units arranged for inspection of a pipe wall, each sensor unit including an array of ultrasonic sensors, wherein said plurality of sensor units defines two or more groups of sensor units, said groups of sensor units being axially offset from one another with respect to the longitudinal axis of the apparatus, the sensor units in each group being spaced circumferentially from one another, further wherein the sensor units are arranged out of phase, to provide inspection coverage for the circumferential spacing between the sensor units in said groups, so that the combined output from the groups of sensor units provides 360 degrees of inspection coverage.

2. Apparatus according to claim 1 wherein each sensor unit includes a skid having an outer surface intended for contact with a pipe wall.

3. Apparatus according to claim 2 wherein each sensor unit is mounted on a carrier for deployment of the sensor unit adjacent a pipe wall, wherein the sensor unit is locally biased on said carrier for biasing the skid into contact with a pipe wall.

4. Apparatus according to claim 2 wherein each sensor unit is mounted on a carrier for deployment of the sensor unit adjacent a pipe wall, wherein each carrier is movable between a first radial position for a first bore diameter and a second radial position for a second bore diameter which is greater than said first bore diameter.

5. Apparatus according to claim 4 wherein each array of ultrasonic sensors defines an inspection zone and wherein the sensor units are arranged so that the combined area of coverage from the inspections zones provides circumferential inspection of the internal surface of a pipe when one or more of said carriers is in said second radial position.

6. Apparatus according to claim 1 wherein each sensor unit is mounted on a mechanism configured for moving the sensor unit radially with respect to the longitudinal axis of the apparatus in response to changes in pipe diameter.

7. Apparatus according to claim 6 wherein said mechanism is configured for biasing the respective sensor unit towards a first radial position for a first bore diameter and towards a second radial position for a second bore diameter which is greater than said first bore diameter.

8. Apparatus according to claim 7 wherein each array of ultrasonic sensors defines an inspection zone and wherein the sensor units are arranged so that the combined area of coverage from the inspections zones provides circumferential inspection of the internal surface of a pipe when one or more of said carriers is in said second radial position.

9. Apparatus according to claim 6 wherein said mechanism includes first and second suspension members configured for biasing a respective sensor unit in a radial direction, and wherein said first and second suspension members are axially off set from one another with respect to the longitudinal axis of the apparatus.

10. Apparatus according to claim 9 wherein said first and second suspension members are configured to pivot relative to said longitudinal axis of the apparatus.

11. Apparatus according to claim 1 wherein each sensor unit is mounted in association with a collapsible linkage configured for biasing a respective sensor unit in the direction of a pipe wall, and configured to permit movement of the respective sensor unit with respect to the longitudinal axis of the body, between a first radial position and a second radial position, in response to changes in pipe diameter.

12. Apparatus according to claim 1 wherein each array of ultrasonic sensors defines an arc of a circle extending in a circumferential direction with respect to a longitudinal axis of the apparatus.

13. Apparatus according to claim 1 wherein each array of ultrasonic sensors defines an inspection zone and wherein the groups of sensor units are arranged to provide a degree of circumferential overlap for each inspection zone.

14. Apparatus according to claim 1 wherein the apparatus comprises a first vessel and a second vessel coupled for movement together along a pipeline, wherein a first group of sensor units are mounted in association with said first vessel and a second group of sensor units are mounted in association with said second vessel.

15. A method of pipeline inspection for a pipeline having a first section with a first bore diameter and a second section with a second bore diameter which is greater than the first bore diameter, said method including the step of:
providing a pipeline apparatus for in-line inspection of the pipeline, said apparatus having a longitudinal axis and including a plurality of ultrasonic sensor units arranged for inspection of a pipe wall, each sensor unit having an array of ultrasonic sensors, wherein said plurality of sensor units defines an upstream group of sensor units and a downstream group of sensor units, said upstream group being axially offset from said downstream group, wherein the sensor units in the upstream group are spaced circumferentially from one another, and the sensor units in the downstream group are spaced circumferentially from one another, further wherein the sensor units in the downstream group are arranged out of phase with the sensor units in the upstream group,
the method further including the steps of sending the apparatus on a continuous run through said first and second sections of the pipeline, and using said ultrasonic sensor units to provide a circumferential inspection of the pipeline in both the first section and said second section, wherein the downstream group of sensor units provides downstream inspection coverage for the circumferential spacing between the sensor units in the upstream group, and the upstream group of sensor units provides upstream inspection coverage for the circumferential spacing between the sensor units in the downstream group.

16. A method according to claim 1 wherein the apparatus is in accordance with any of claims 1 to 14.
